# EUROPEAN PATENT APPLICATION

(11) **EP 2 821 760 A1**
(43) Date of publication of application: **07.01.2015**
(21) Application number: 13754287.4
(22) Date of filing: 26.02.2013
(51) Int. Cl.: G01G 7/02

(54) **ELECTROMAGNETIC FORCE BALANCE**

(30) Priority: 28.02.2012 JP 2012041518; 11.08.2012 JP 2012179114
(71) Applicant: Shinko Denshi Company Limited, Tokyo 113-0034 (JP)
(72) Inventor: NAITO Kazufumi, Bunkyo-ku, Tokyo 113-0034 (JP); TERUNUMA Kouzou, Bunkyo-ku, Tokyo 113-0034 (JP); FUJIHARA Kazushi, Bunkyo-ku, Tokyo 113-0034 (JP); IKESHIMA Masaru, Bunkyo-ku, Tokyo 113-0034 (JP); ISHIDA Shinichirou, Bunkyo-ku, Tokyo 113-0034 (JP); ISHIHARA Yoshiyuki, Kyotanabe City, Kyoto 610-0394 (JP); FUJIWARA Koji, Kyotanabe City, Kyoto 610-0394 (JP); TAKAHASHI Yasuhito, Kyotanabe City, Kyoto 610-0394 (JP); SUMITOMO Hisato, Kyotanabe City, Kyoto 610-0394 (JP)
(74) Representative: Heyer, Volker
(86) International application number: PCT/JP2013/054926
(87) International publication number: WO 2013/129383

(57) **Abstract**

The coil that is installed on a lever is obtained from a flat coil, which is wound flat so as to generate upper and lower winding regions that are parallel to the direction that the lever extends along a vertical surface that is parallel to the direction that the lever extends. The magnetic circuit is provided with multiple plate-shaped permanent magnets that face the upper and lower winding regions of the flat coil and are magnetized in a direction that is orthogonal to the vertical surface, and yoke members that induce lines of magnetic force of the permanent magnets so that a magnetic flux of an orientation that is orthogonal to the vertical surface is generated.

## Description

### Field of Invention:

The present invention relates to an electromagnetic force balance for weighing, for example, products or the like being transported to a production line and features in reducing the thickness of the balance in the width direction for minimizing the footprint of the balance.

### Background Art:

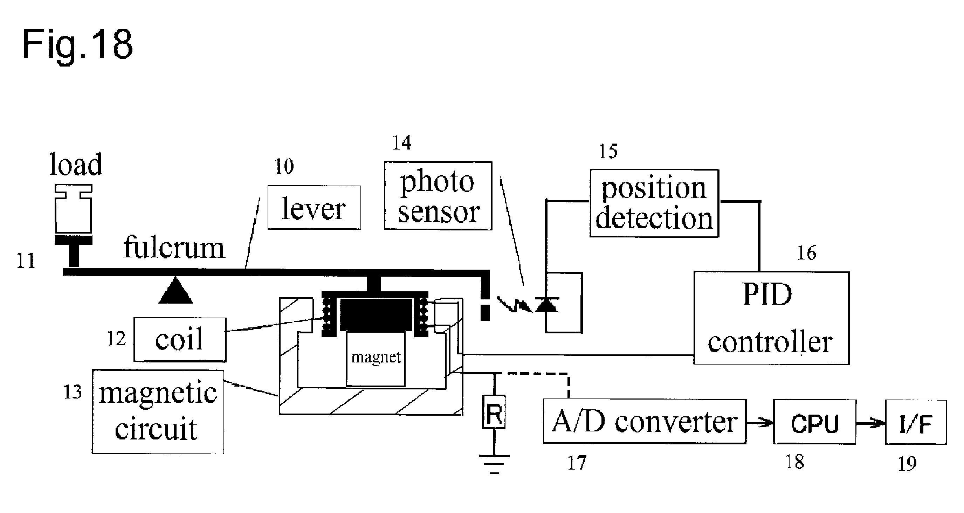

As illustrated in Fig. 18, an electromagnetic force balance comprises a lever 10 supported by a fulcrum, a load receiving position 11 where a load is placed at one side of the lever 10, a coil 12 that is attached to the other side of the lever 10, a magnetic circuit 13 that acts magnetic field on a permanent magnet to the coil 12, a photo sensor 14 and a position detection portion 15 for detecting displacement of the lever 10, a PID controller 16 for supplying a current to the coil 12 in order to compensate for displacement of the lever 10. Weight of the load is calculated by an A/D converter 17 and a CPU 18 based on the current supplied to the coil for compensating displacement of the lever and the weight data is outputted externally by way of an interface 19.

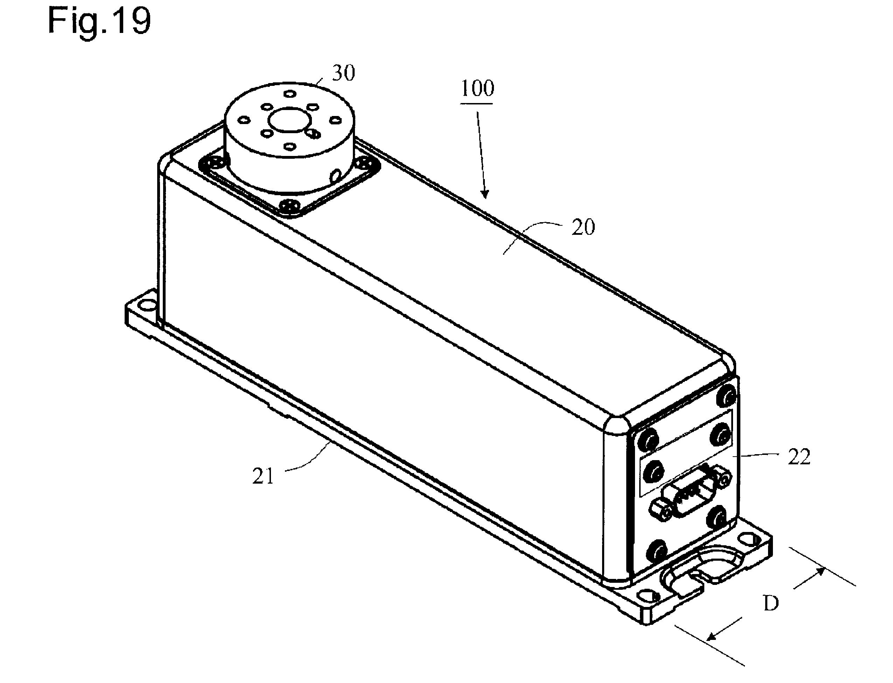

The following Patent Document 1 discloses an electromagnetic force balance that is assembled into a production line for weighing products, parts or the like that flow on the production line. The outer appearance of the assembling type balance 100 is illustrated in Fig. 19 and comprises a cover 20 made from stainless steel as a casing and a base 21 made from stainless steel, wherein only a load receiving position 30 is exposed from the upper surface of the cover 20. A weighing dish (not shown) is placed on the load receiving position 30 and an object to be weighed (not shown) is placed on the weighing dish. Also mounted on the rear end of the cover 20 is a rear cover 22 on which a connector is mounted.

Inside the casing, there are disposed the lever 10, the coil 12, the magnetic circuit 13 and the photo sensor 14 as shown in Fig. 18. The electrical part including the position detection portion 15, the PID controller 16, the A/D converter 17 and the CPU 18 is also stored in the casing.

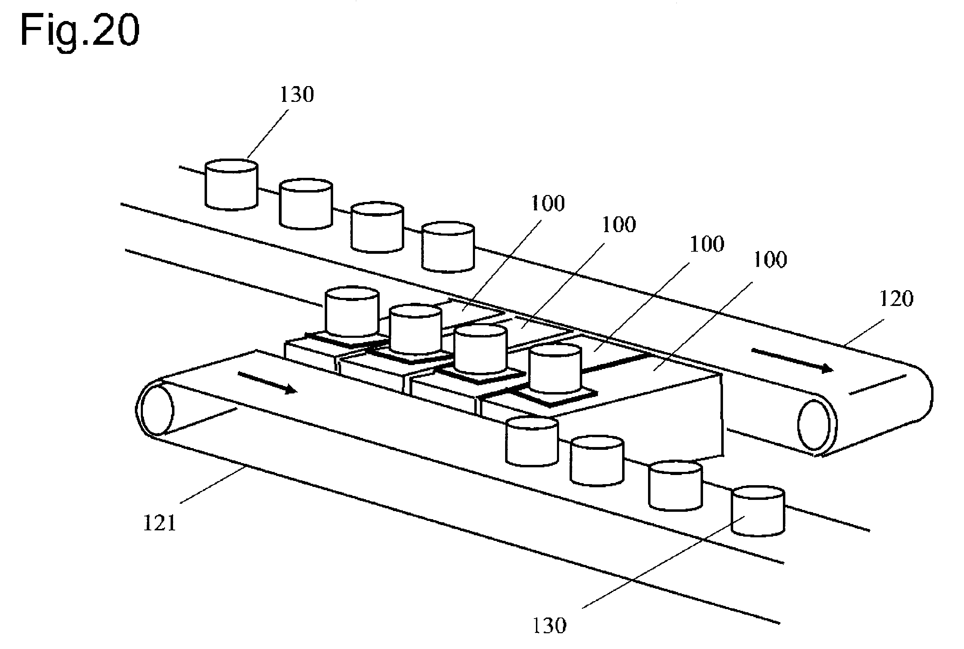

For example, a plurality of such assembling type balances 100 as illustrated in Fig. 20 are disposed in parallel between a carry-in conveyor 120 and a carry-out conveyor 121. A plurality of objects to be weighed 130 that are carried in by the carry-in conveyor 120 are grabbed by a chucking handle (not shown) or the like and are simultaneously placed on the weighing dishes of assembling type balances 100 for weighing. After weighing, the objects to be weighed 130 are grabbed by the chucking handle for transfer to the carry-out conveyor 121 for carrying them out.

### Prior Art Documents:

### Patent Documents

Patent Document 1: JP20012-13465 A2
Patent Documents 2: US4,545,446 B2

### Summary of Invention:

### Problems to be Solved by the Invention:

In known electromagnetic force balances, a magnetic circuit comprising a bottle type yoke (speaker type yoke) is employed in order to act magnetic field on a coil as shown in Fig. 18.

On the other hand, disclosed in the above Patent Document 2 is a magnetic circuit as shown in Fig. 21, wherein a permanent magnet 74 and a coil 54 are disposed along the plane in perpendicular to the direction that the lever 36 extends and yokes 70, 72 are disposed in such a manner to cover the permanent magnet and the coil.

However, in case of assembling such electromagnetic force balance in a production line, thickness in the width direction (the dimension D in Fig. 19) increases if the magnetic circuit comprising the bottle type yoke or the magnetic circuit as disclosed in the Patent Document 2 is used, thereby making it difficult to assemble a plurality of balances in a production line or to make a production line compact.

The present invention was made in consideration of the above circumstances and it is an object of the present invention to provide an electromagnetic force balance that is thin in the width direction.

### Means to Solve the Problems:

The present invention is an electromagnetic force balance comprising a lever portion extending forwardly and backwardly from a fulcrum, a coil to be mounted at a backward side from the fulcrum of the lever portion, and a magnetic circuit for developing magnetic field to act on the coil, wherein a force to act on a force point of the lever portion at the forward side of the fulcrum is compensated by supplying a current to the coil. It features in that the coil extends along a vertical plane in parallel with the extending direction of the lever portion and is a flat coil wound in flat to have upper and lower winding portions parallel with the extending direction of the lever portion and that the magnetic circuit comprises one or a plurality of plate-shaped permanent magnets that face the upper or lower winding portion of the flat coil and magnetized in the orthogonal direction to the vertical plane and a yoke member for guiding magnetic line of force of the permanent magnet so as to develop magnetic flux in the direction perpendicular to the vertical plane.

The electromagnetic force balance enables to reduce the thickness of the balance in the width direction because the flat coil is disposed vertically along the direction that the lever portion extends and the magnetic circuit is disposed in parallel with the flat coil.

Also, in the present invention, a pair of permanent magnets facing respectively the upper and lower winding portions of the flat coil are disposed at one side of the flat coil and the directions of magnetization of the pair of permanent magnets are opposite to each other.

In the electromagnetic force balance, when a current is supplied to the coil, there are developed vertical forces in the same direction at the upper and lower winding portions of the flat coil, thereby enabling to compensate the force acting on the force point with a small size flat coil.

Also, it is preferable in the present invention to provide at the other side of the flat coil a pair of plate-shaped yoke members that face respectively the two permanent magnets.

In such particular construction of disposing a pair of plate-shaped yokes at the same side, it is possible to reduce the width of the entire magnetic circuit by decreasing the thickness of the plate-shaped yokes, which is advantageous to achieve a thin balance.

Also, in the present invention, it is preferable that the plate-shaped yoke members have the same area as the permanent magnets that face each other by way of the flat coil.

In this arrangement, it is possible to increase magnetic flux that acts on the flat coil and to ensure symmetrical distribution of magnetic flux density.

Additionally, in the present electromagnetic force balance, the magnetic circuit comprises an upper permanent magnet facing the upper winding portion at one side of the flat coil, a lower permanent magnet facing the lower winding portion at the other side of the flat coil, a plate-shaped upper yoke member facing the upper permanent magnet by way of the upper winding portion and a plate-shaped lower yoke member facing the lower permanent magnet by way of the lower winding portion, wherein the direction of magnetization of the upper permanent magnet is opposite to the direction of magnetization of the lower permanent magnet, elongated protrusions are provided at upper and lower sides of the upper yoke member for reducing the gap between the upper permanent magnet, and elongated protrusions are provided at the upper and lower sides of the lower yoke member for reducing the gap between the lower permanent magnet.

In the electromagnetic force balance, strength of the electromagnetic force to be developed when a current is supplied to the flat coil hardly changes even if the position of the flat coil may change. As a result, even if the balance point of the system may be shifted by any cause, it is possible to avoid any change in span, thereby enabling to ease assembling precision required for structural components.

Also, in the electromagnetic force balance according to the present invention, it is preferable to cover the magnetic circuit with an electromagnetic steel plate.

Such electromagnetic steel plate helps to reduce the thickness of the yokes, thereby promoting reduction in thickness of the balance because they absorb magnetic flux leaking from the yokes of the magnetic circuit.

Additionally, the electromagnetic force balance according to the present invention is particularly suitable for an assembling type balance to be used by assembling into a production line.

Since the balance is thin in the width direction, it is possible to dispose a plurality of balances in parallel in a narrow space in the production line, thereby making the production line more compact.

### Advantages of the Invention:

The electromagnetic force balance according to the present invention reduces the dimension in the width direction. As a result, a large number of such balances can be disposed in parallel in a smaller area.

Also, in the electromagnetic force balance according to the present invention, the permanent magnets are placed at different sides of the flat coil, i.e., disposed in opposed relationship to the upper and lower winding portions of the flat coil and elongated protrusions are provided at the upper and lower sides of the yoke members that make pairs with the permanent magnets, thereby enabling to avoid any change of span due to possible shift of the balance point of the system for any cause and ease assembling precision of the structural components because the strength of the electromagnetic force to be developed when a current is supplied to the flat coil is substantially independent of the position of the flat coil

### Brief Description of Drawings:

[Fig. 1] A cross section view of one embodiment of the electromagnetic force balance according to the present invention
[Fig. 2] A plan view of the electromagnetic force balance as shown in Fig. 1
[Fig. 3] A cross section view of a magnetic circuit section along the line A-A in Fig. 1
[Fig. 4] A cross section view of the magnetic circuit section along the line B-B in Fig. 1
[Fig. 5] A drawing to illustrate magnetic flux of the magnetic circuit as shown in Fig. 1
[Fig. 6] Graphs to show changes in leakage magnetic flux density and electromagnetic force depending on the distance between the permanent magnets (A) and the distance between the permanent magnet and the neighboring yoke (B)
[Fig. 7] A drawing for illustrating the distances A and B as referred to in Fig. 6
[Fig. 8] Drawings to show modified examples of the magnetic circuit section ((a) is an example of modifying the position of the permanent magnets, while (b) is an example of disposing the permanent magnets in opposed relationship)
[Fig. 9] A drawing to illustrate the magnetic circuit covered with an electromagnetic steel plate
[Fig. 10] A drawing to show a magnetic circuit of a second embodiment of the electromagnetic force balance according to the present invention
[Fig. 11] Graphs to illustrate magnetic flux density distributions of the magnetic circuit as shown in Fig. 10
[Fig. 12] Drawings to illustrate analyzing positions of the magnetic flux density distribution in Fig. 11
[Fig. 13] Graphs to illustrate changes of the electromagnetic force when the coil of the magnetic circuit as shown in Fig. 10 moves in y-direction
[Fig. 14] Graphs to show changes of the electromagnetic force when the coil of the magnetic circuit as shown in Fig. 10 moves in x-direction
[Fig. 15] Graphs to illustrate changes of the electromagnetic force when analyzed by varying the distance between elongated protrusions as a result of position change of coil in y-direction
[Fig. 16] Graphs to illustrate changes of the electromagnetic force when analyzed by varying the distance between elongated protrusions as a result of position change of the coil in x-direction
[Fig. 17] A drawing to illustrate measurement conditions in Figs. 15 and 16
[Fig. 18] A drawing to illustrate the construction of a conventional electromagnetic force balance
[Fig. 19] A drawing to illustrate an external view of a conventional electromagnetic force balance for assembling in a production line
[Fig. 20] A drawing to illustrate a plurality of balances as shown in Fig. 19 are assembled in a production line

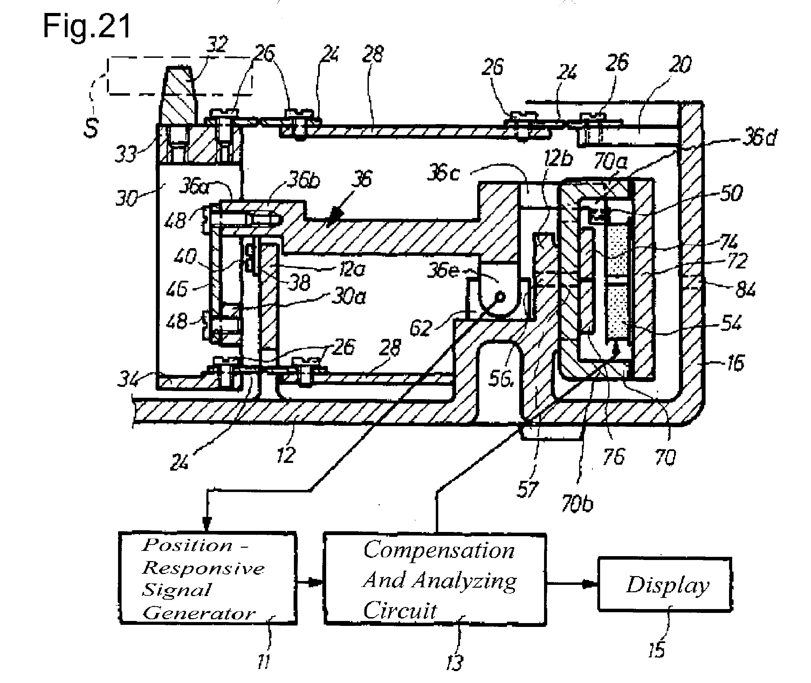

[Fig. 21] A drawing to illustrate another construction of a conventional electromagnetic force balance

### Embodiments to Implement the Invention:

### (First Embodiment)

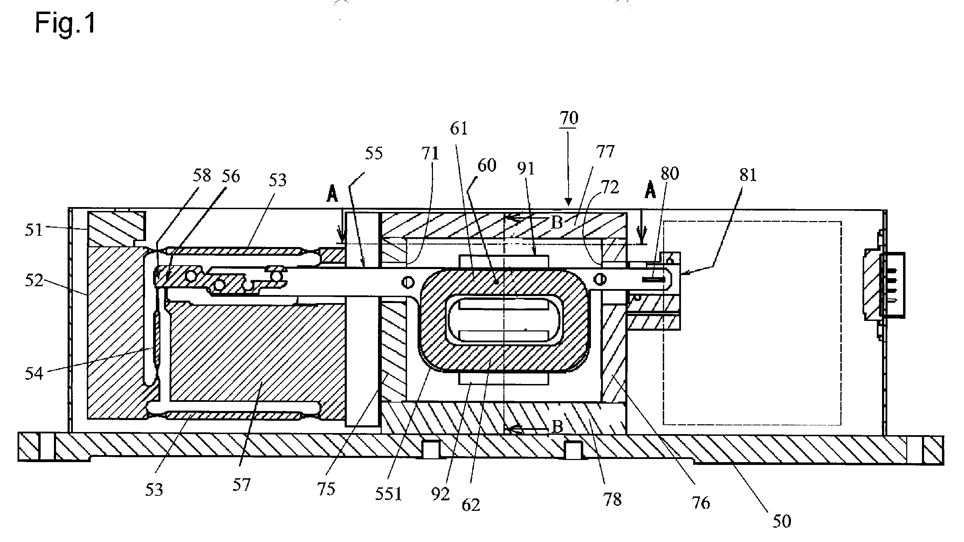

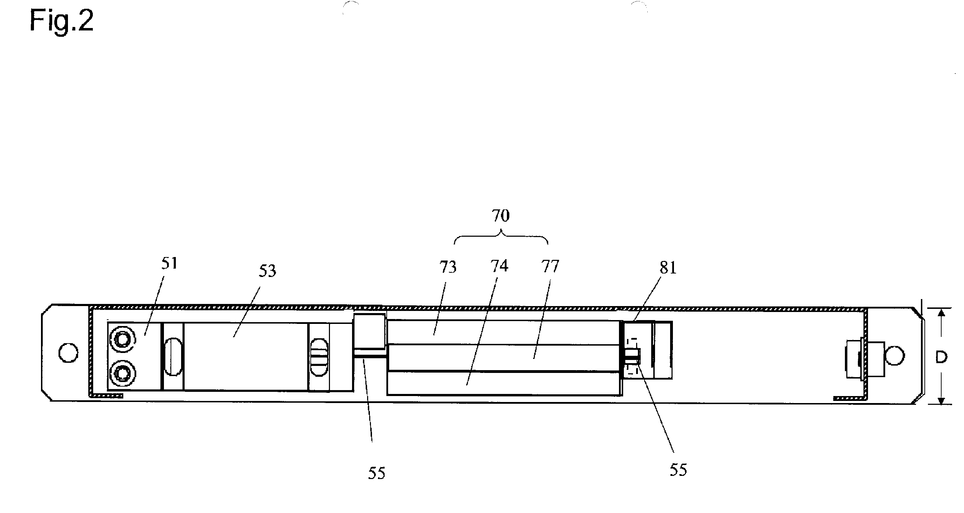

Fig. 1 is a cross section view of the electromagnetic force balance according to an embodiment of the present invention and Fig. 2 is a plan view thereof.

The balance comprises a movable portion 52 for supporting a load receiving portion 51 and moving downward upon placing an object to be weighed, a pair of parallel Roberval mechanisms 53 having their one ends coupled to the movable portion 52, a coupling portion 54 having its one end coupled to the movable portion 52, a lever portion 55 coupled to the other end of the coupling portion 54 and a fixed portion 57 for supporting a fulcrum 56 of the lever portion 55 and also coupled to the other end of the Roberval mechanism 53. The fixed portion 57 is fixedly mounted on a base plate 50 by way of a magnetic circuit that will be described hereinafter. The coupling point (58) between the lever portion 55 and the coupling portion 54 is a force point 58 to which a force corresponding to the load acts on the lever portion 55.

In this specification, the side of the lever portion 55 where the force point 58 locates is referred to as a front side and the opposite side is referred to as a back side.

The back side of the lever portion 55 that is supported by the fulcrum 56 is able to move in a vertical direction depending on a force that acts on the force point 58. However, in fact, as will be described hereinafter, the lever portion 55 hardly moves because movement of the lever portion 55 is immediately compensated by supplying a current to the flat coil 60. A slit 80 is formed at the rear end of the lever portion 55 for detecting its position in the vertical direction.

At a location of the lever portion 55 forward of the slit 80, there is mounted a flat coil 60 that is constructed by winding an electrical wire in a form of a track (running track). The flat coil 60 has an upper winding portion (upper parallel winding portion) 61 and a lower winding portion (lower parallel winding portion) 62 in parallel with the direction that the lever portion 55 extends.

The lever portion 55 is provided with a flat coil support portion 551 on which the flat coil 60 is mounted. The flat coil support portion 551 extends vertically downward from the lever portion 55 and has an area slightly larger than that of the flat coil 60. The flat coil support portion 551 and a part of the lever portion 55 that is made integrally with the flat coil support portion are made from non-magnetic material such as aluminum plate, plastic plate or the like.

A magnetic circuit 70 that develops magnetic field acting on the flat coil 60 is fixedly mounted on the base plate 50 in such a manner to cover the flat coil 60.

It is to be noted that the magnetic circuit 70 is formed with through-holes 71, 72 so that the lever portion 55 can move without interruption (see Fig. 1). A rear end of the lever portion 55 extends outwardly from the rear through-hole 72 and the slit at the rear end is used to mount a photo interrupter 81 on the magnetic circuit 70 for detecting the rear end position (position in the vertical direction) of the lever portion 55. The photo interrupter 81 comprises a light emitting portion and a light receiving portion that are opposed to each other and detects by the light receiving portion the light from the light emitting portion through the slit 80 when the lever portion 55 is in a reference position.

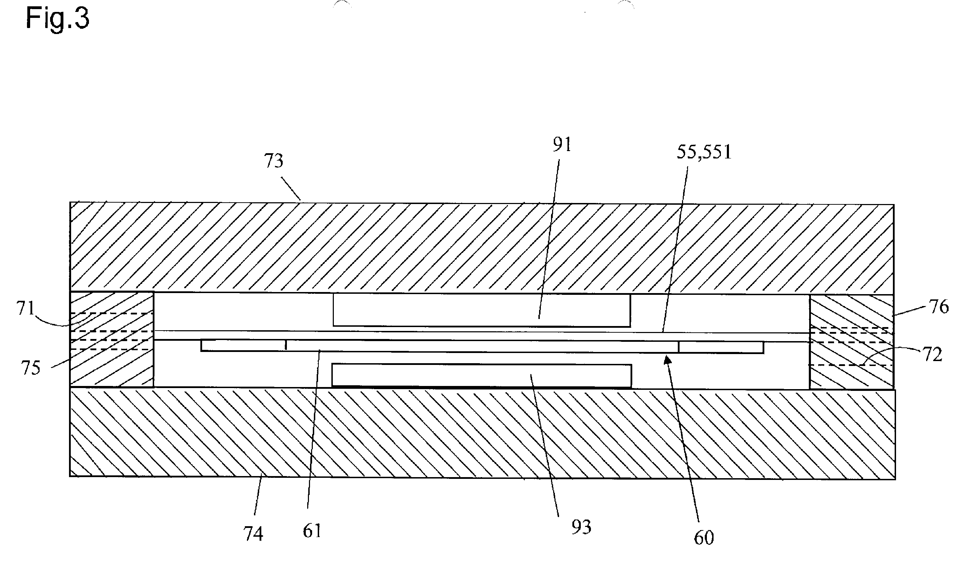

Fig. 3 shows the magnetic circuit 70 as well as the lever portion 55 and the flat coil 60 that are covered with the magnetic circuit 70 as seen in cross section along the line A-A in Fig. 1.

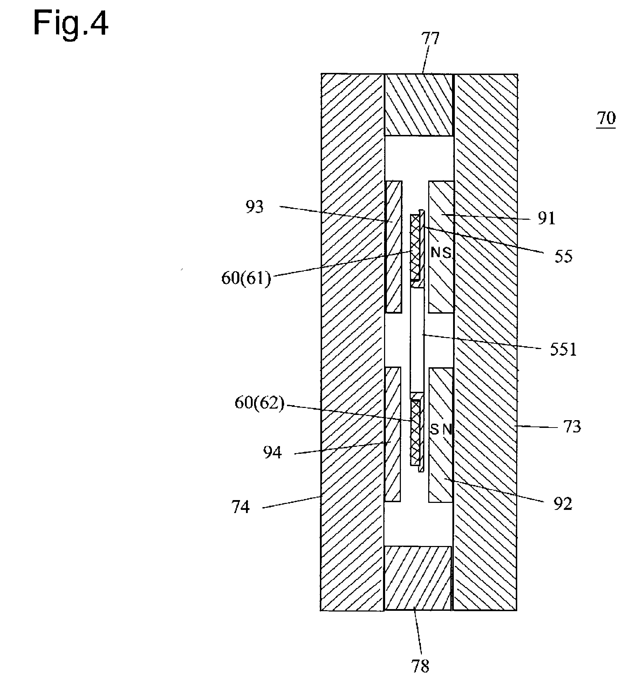

Also, Fig. 4 shows the magnetic circuit 70 as well as the lever portion 55 and the flat coil 60 that are covered with the magnetic circuit 70 as seen in cross section along the line B-B in Fig. 1.

The magnetic circuit 70 that covers the flat coil 60 comprises a first lateral side yoke 73 extending vertically along the longitudinal direction of the lever portion 55, a second lateral side yoke 74 extending vertically in parallel with the first lateral side yoke 73, a front side yoke 75 extending at the front side relative to the fulcrum 56 and formed with the through-hole 71, rear side yoke 76 extending at the rear side relative to the fulcrum 56 and formed with the through-hole 72, an upper side yoke 77 to cover the space surrounded in four directions by the first lateral side yoke 73, the front side yoke 75, the second lateral side yoke 74 and the rear side yoke 76, and a lower side yoke 78 to cover the bottom of such space.

Also, as shown in Fig, 4, a plate-shaped permanent magnet (upper plate-shaped permanent magnet) 91 is mounted inside the first lateral side yoke 73 at a location that faces the upper side parallel winding portion 61 and a plate-shaped permanent magnet (lower plate-shaped permanent magnet) 92 is mounted at a location that faces the lower side parallel winding portion 62. The upper side plate-shaped permanent magnet 91 and the lower side plate-shaped permanent magnet 92 are magnetized in their thickness direction. However, the magnetizing directions of the upper side plate-shaped permanent magnet 91 and the lower side plate-shaped permanent magnet 92 are opposite to each other.

Also fixedly mounted inside the second lateral side yoke 74 is an upper plate-shaped yoke 93 having the same area with but smaller in thickness than the upper plate-shaped permanent magnet 91 at the location opposed to the upper plate-shaped permanent magnet 91 in such a manner to sandwich the upper parallel winding portion 61 of the flat coil 60 therebetween. And a lower plate-shaped yoke 94 having the same area with but smaller in thickness than the lower plate-shaped permanent magnet 92 is fixedly mounted at the location opposed to the lower plate-shaped permanent magnet 92 in such a manner to sandwich the lower parallel winding portion 62 of the flat coil 60 therebetween.

In the above arrangement, when the upper plate-shaped permanent magnet 91 and the upper plate-shaped yoke 93 as well as the lower plate-shaped permanent magnet 92 and the lower plate-shaped yoke 94 each having the same area are placed adjacent to each other in an opposed relationship, magnetic flux of high magnetic flux density passes through the upper parallel winding portion 61 and the lower parallel winding portion 62 in the opposed position so that their vectors are aligned with the vertical direction with respect to the plane of the flat coil 60.

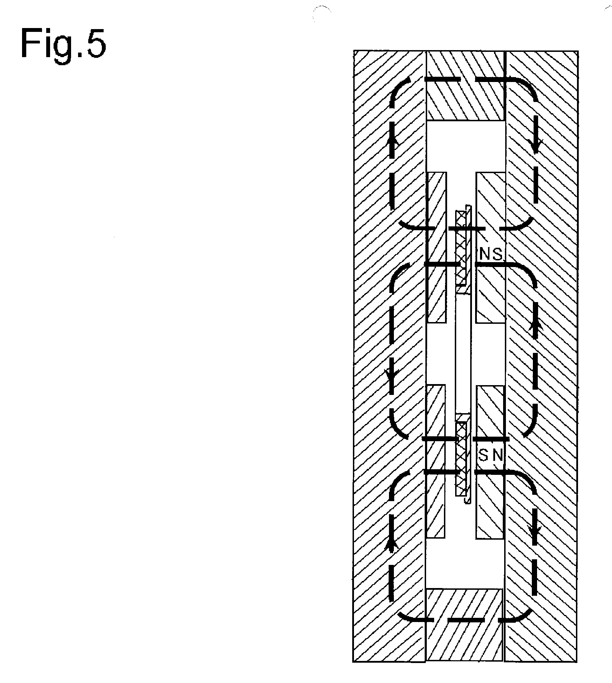

Fig. 5 illustrates magnetic flux flowing through the magnetic circuit as shown in Fig. 4.

It is to be noted, however, that the electromagnetic force to be developed when a current is supplied to the flat coil 60 tends to decreases because magnetic flux between the permanent magnets increases and thus magnetic flux density in the vector perpendicular to the plane of the flat coil 60 decreases when the upper plate-shaped permanent magnet 91 is too close to the lower plate-shaped permanent magnet 92.

The magnetic flux density of magnetic flux in the direction from the upper plate-shaped permanent magnet 91 to the upper plate-shaped yoke 93 (magnetic flux in the vector perpendicular to the plane of the flat coil 60) also decreases when the distance from the opposed position of the upper plate-shaped permanent magnet 91 and the upper plate-shaped yoke 93 to the upper side yoke 77 that is located sideward thereof is too short, because magnetic flux is developed between the upper plate-shaped permanent magnet 91 and the upper side yoke 77. Accordingly, it decreases the electromagnetic force to be developed when a current is supplied to the flat coil 60. Similarly, this relationship applies between the lower plate-shaped permanent magnet 92, the lower plate-shaped yoke 94 and the lower side yoke 78.

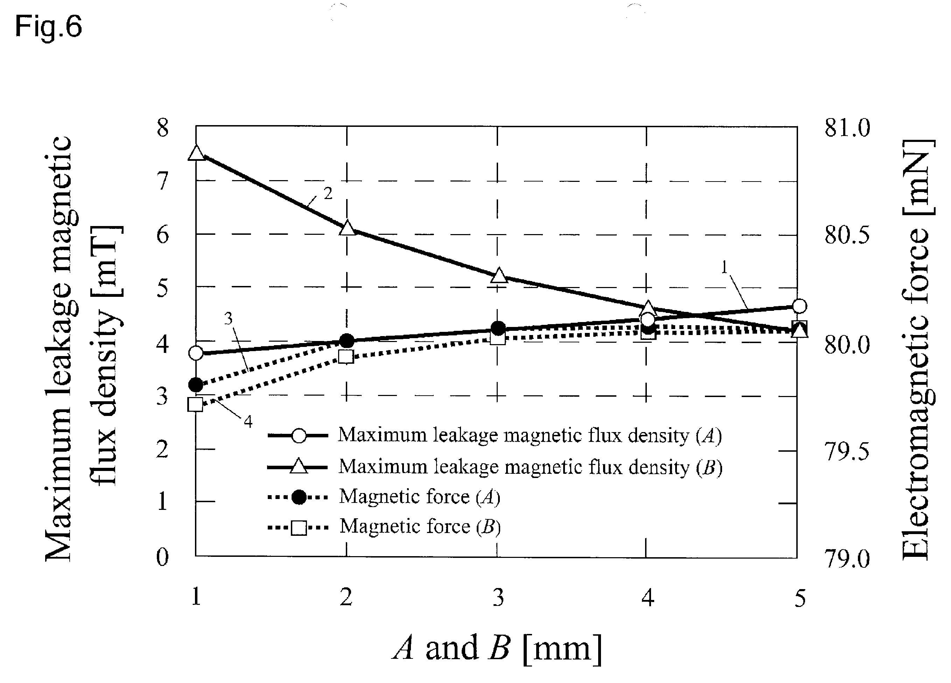

Fig. 6 shows analytical results of the electrical magnetic force that is affected by the distance between the magnets of the upper plate-shaped permanent magnet 91 and the lower plate-shaped permanent magnet 92 and the distance between the upper plate-shaped permanent magnet 91 and the upper side yoke 77.

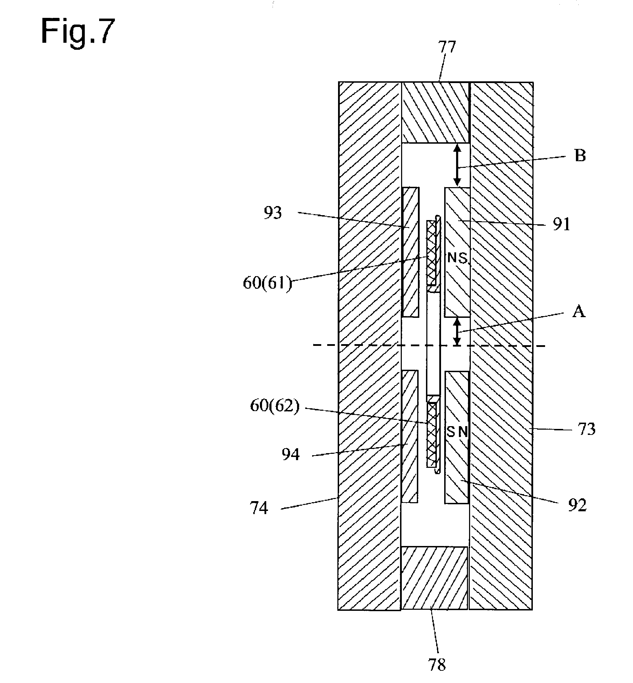

As illustrated in Fig. 7, the distance between the center of the magnetic circuit (dotted line position) and one end of the upper plate-shaped permanent magnet 91 is referred to as A and the distance from the other end of the upper plate-shaped permanent magnet 91 and the upper side yoke 77 is referred to as B. Analyses are made how the maximum value in the leakage magnetic flux density from the side surface and the electromagnetic force to be developed by the flat coil 60 change depending on A and B.

In the graphs as illustrated in Fig. 6, the horizontal axis represents the distances A and B (mm), the left vertical axis represents the maximum leakage magnetic flux density (mT) and the right vertical axis represents the electromagnetic force (mN) that is developed by the flat coil 60. A solid line 1 shows how the maximum value of the leakage magnetic flux density changes as a function of A, a solid line 2 shows how the maximum value of the leakage magnetic flux density changes as a function of B, a dotted line 3 shows how the electromagnetic force changes as a function of A, and a dotted line 4 shows how the electromagnetic force changes as a function of B.

As apparent from Fig. 6, when the distance between the magnets is short (when A is small), amount of magnetic flux between the upper plate-shaped permanent magnet 91 and the lower plate-shaped permanent magnet 92 increases, the magnetic flux density that acts on the flat coil 60 decreases and the electromagnetic force to be developed by the flat coil 60 decreases. The amount of magnetic flux between the upper plate-shaped permanent magnet 91 and the upper plate-shaped yoke 93 increases as a result of increasing A, thereby improving the electromagnetic force to be developed by the flat coil 60. At the same time, the maximum value of the leakage magnetic flux density from the side surface increases slightly.

Similarly, when the distance (B) from the upper plate-shaped permanent magnet 91 and the upper side yoke 77 is short, amount of magnetic flux between the upper plate-shaped permanent magnet 91 and the upper side yoke 77 increases and the maximum value of the leakage magnetic flux density from the side surface increases. As a result, the magnetic flux density that acts on the flat coil 60 decreases and the electromagnetic force to be developed by the flat coil 60 becomes smaller. This means that the distance B needs to be increased to a certain extent.

Taking these analytical results into consideration, in the electromagnetic force balance, the distance between the upper plate-shaped permanent magnet 91 and the upper side yoke 77 and the distance between the lower plate-shaped permanent magnet 92 and the lower side yoke 78 are set to one-third of the dimension of the plate-shaped permanent magnets 91, 92 and the distance between magnets of the upper plate-shaped permanent magnet 91 and the lower plate-shaped permanent magnet 92 is set to two-fifths of the dimension of the plate-shaped permanent magnets 91, 92.

In the electromagnetic force balance, when a current is supplied to the flat coil 60 in order to compensate for the vertical movement of the lever portion 55, the upper parallel winding portion 61 and the lower parallel winding portion 62 of the flat coil 60 develop forces in the same vertical direction. It is the sum of these forces to pull the lever portion 55 back to its reference position.

In the electromagnetic force balance as described hereinabove, the flat coil 60 is disposed vertically along the direction that the lever portion 55 extends and the plate-shaped permanent magnets 91, 92 and the plate-shaped yokes 93, 94 as well as the right and left side yokes 73, 74 fixedly mounted thereon by sandwiching the flat coil 60 are all disposed in parallel with the flat coil 60, thereby enabling to significantly reduce the dimension in the width direction (dimension D in Fig. 2).

As a result, in case of disposing a plurality of electromagnetic force balances in parallel in a production line, they occupy a smaller area, thereby enabling to make the production line more compact.

Since the plate-shaped permanent magnets 91, 92 and the plate-shaped yokes 93, 94 having the same area are located adjacent to each other and in an opposed relationship by sandwiching the parallel winding portions 61, 62 of the flat coil 60, there develops magnetic field uniformly distributed on the plane of the flat coil 60 at the locations of the parallel winding portions 61, 62 and yet high density (large amount of magnetic flux) in magnetic flux density distribution. Such magnetic field ensures symmetry in the movement of the flat coil 60 and thus high weighing precision.

Since the upper plate-shaped permanent magnet 91 and the lower plate-shaped permanent magnet 92 are disposed in opposed relationship with the upper parallel winding portion 61 and the lower parallel winding portion 62 of the flat coil 60 and the directions of the magnetization of the upper plate-shaped permanent magnet 91 and the lower plate-shaped permanent magnet 92 are opposite to each other, there develop vertical forces in the same direction when a current is supplied to the flat coil 60. As a result, a smaller flat coil 60 may be used to obtain a compensation force for the movement of the lever portion 55.

However, if a larger force is required in order to compensate for the movement of the lever portion 55, it is possible to cope with the need by expanding the length of the upper parallel winding portion 61 and the lower parallel winding portion 62 of the flat coil 60, accordingly expanding the length of the upper plate-shaped permanent magnet 91 and the lower plate-shaped permanent magnet 92, or placing a plurality of the upper plate-shaped permanent magnets 91 and the lower plate-shaped magnets 92 in opposed relationship with the upper parallel winding portion 61 and the lower parallel winding portion 62.

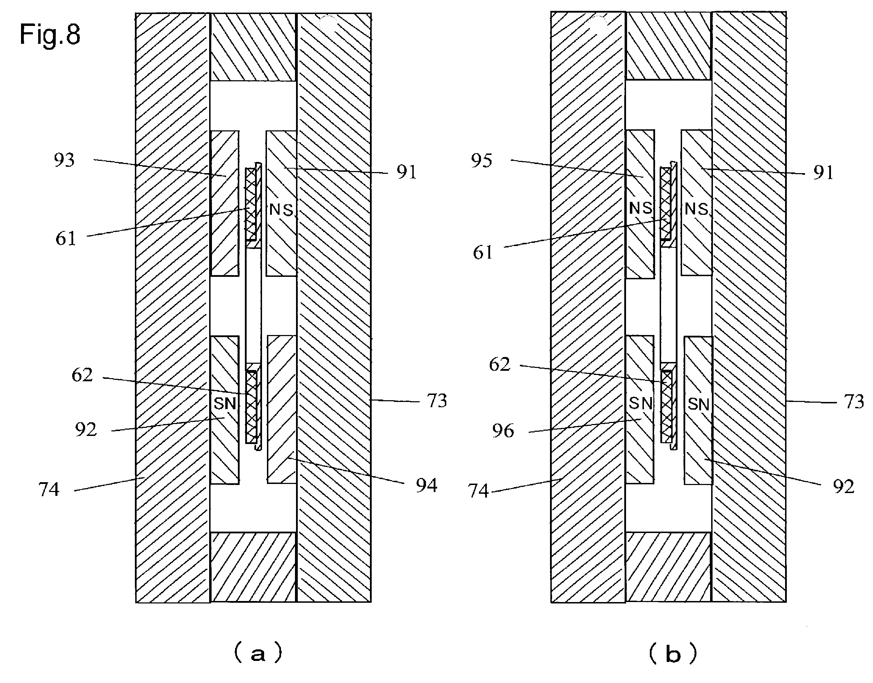

As shown in Fig. 8 (a), it is possible to fixedly mount the upper plate-shaped permanent magnet 91 and the lower plate-shaped yoke 94 on the inner surface of the first lateral side yoke 73 and also fixedly mount the upper plate-shaped yoke 93 and the lower plate-shaped permanent magnet 92 on the inner surface of the second lateral side yoke 74.

As shown in Fig. 8 (b), it is also possible to dispose plate-shaped permanent magnets 91, 95 that are magnetized in the same thickness direction at both sides of the parallel winding portion 61 in an opposed relationship and dispose plate-shaped permanent magnets 92, 96 that are magnetized in the same thickness direction at both sides of the parallel winding portion 62 (it is to be noted, however, that the directions of magnetization of the plate-shaped permanent magnet 91 and the plate-shaped permanent magnet 92 are opposite to each other and those of the plate-shaped permanent magnet 95 and the plate-shaped permanent magnet 96 are opposite to each other).

Now, comparing the arrangements as shown in Fig. 8 (a) and Fig. 4, in case of using the plate-shaped permanent magnets 91, 92 having the same thickness, the arrangement as shown in Fig. 4 in which the plate-shaped yokes 93, 94 are disposed at the same side is advantageous to reduce the thickness of the balance because the width of the entire magnetic circuit can be minimized by reducing the thickness of the plate-shaped yokes 93, 94. However, in this case, since the volumes of the plate-shaped permanent magnets 91, 92 are the same in Fig. 4 and Fig. 8 (a), there is essentially no difference in force that is developed when a current is supplied to the flat coil 60.

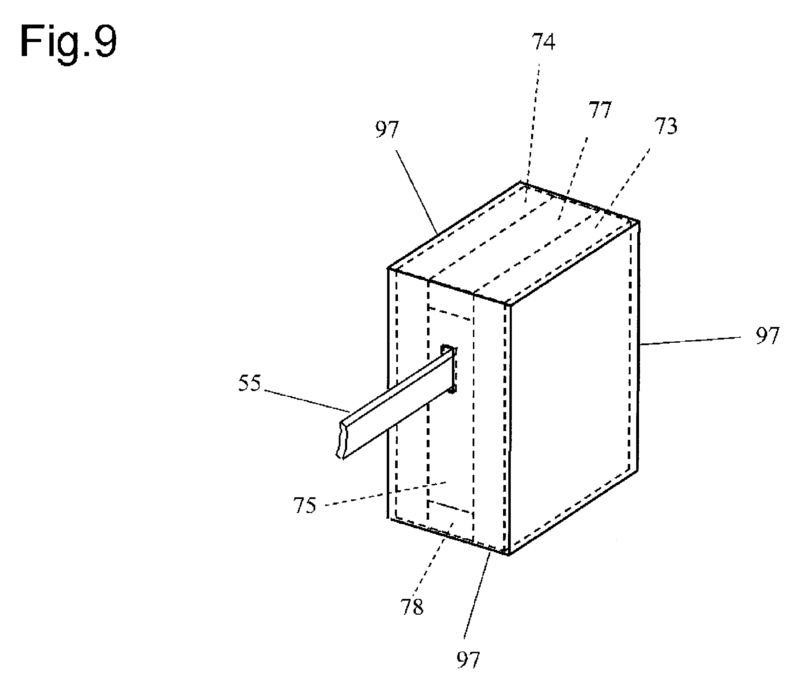

Now, as shown in Fig. 9, it is possible to entirely cover with an electromagnetic steel plate 97 having electromagnetic shielding capability the outer surface of the first lateral side yoke 73, the front side yoke 75 the second lateral side yoke 74, the rear side yoke 76, the upper side yoke 77 and the lower side yoke 78 that constitute the outside of the magnetic circuit. The electromagnetic steel plate 97 prevents magnetic flux from leaking externally by absorbing leakage magnetic flux from the yokes of the magnetic circuit.

If the thickness of the yokes constituting the outside of the magnetic circuit reduces in order to further promote thinning of the balance, the leakage magnetic flux from the yokes may increase. However, such leakage magnetic flux can be blocked by entirely covering the outside of the magnetic circuit with the electromagnetic steel plate 97. As a result, leakage magnetic flux has no adverse effect to neighboring balances.

This means that covering the entire magnetic circuit with the electromagnetic steel plate 97 is effective for further thinning the balance.

### (Second Embodiment)

In such electromagnetic force balance for measuring an object to be weighed based on the current supplied to the flat coil 60, it is not preferable if the electromagnetic force that is developed when a current is supplied to the flat coil 60 may change depending on the position of the flat coil 60 inside the magnetic circuit 70. Because there causes a large span change if the relationship between the developing electromagnetic force and the current depends on the position of the flat coil 60, i.e., when the balance point of the system may be shifted by any cause. Also, it is impossible to obtain the electromagnetic force of the necessary magnitude unless tightening assembling precision of the mechanical components.

A second embodiment of the electromagnetic force balance according to the present invention is constructed so that the relationship between the developing electromagnetic force and the current remains essentially unchanged regardless of the position of the flat coil 60.

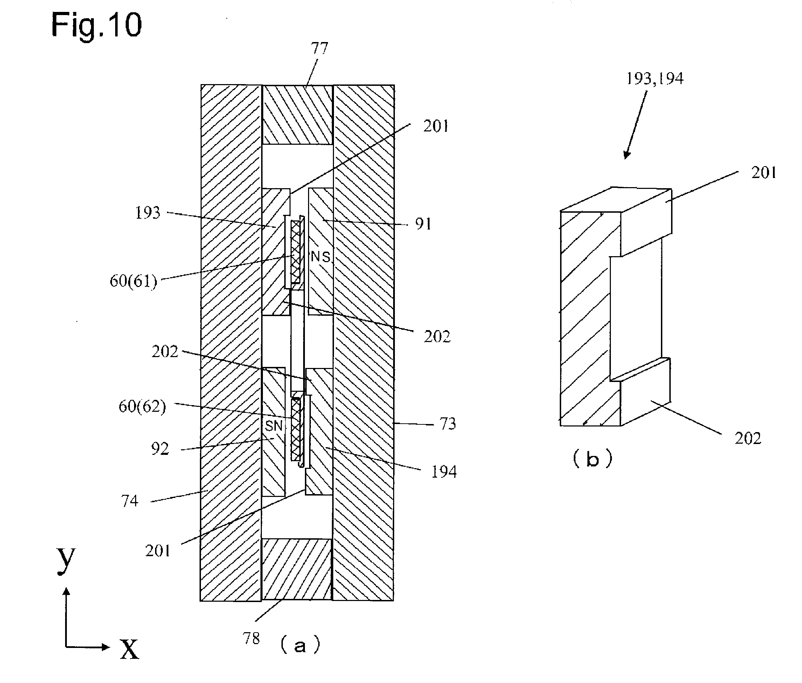

The magnetic circuit of such electromagnetic force balance is shown as a cross section view in Fig. 10 (a). In the magnetic circuit, as is similar to the case in Fig. 8 (a), the direction that the upper plate-shaped permanent magnet 91 and the upper plate-shaped yoke 193 face at the location of the upper parallel winding portion 61 of the flat coil 60 is opposite to the direction that the lower plate-shaped permanent magnet 92 and the lower plate-shaped yoke 194 face at the location of the lower parallel winding portion 62.

That is, the upper plate-shaped permanent magnet 91 facing the upper parallel winding portion 61 is fixedly mounted on the first lateral side yoke 73 and the upper plate-shaped yoke 193 facing the upper plate-shaped permanent magnet 91 by way of the upper parallel winding portion 61 is fixedly mounted on the inner surface of the second lateral side yoke 74. And the lower plate-shaped permanent magnet 92 facing the lower parallel winding portion 62 is fixedly mounted on the inner surface of the second lateral side yoke 74 and the lower plate-shaped yoke 194 facing the lower plate-shaped permanent magnet 92 by way of the lower parallel winding portion 62 is fixedly mounted on the inner surface of the first lateral side yoke 73. It is to be noted that the areas where the upper plate-shaped permanent magnet 91, the lower plate-shaped permanent magnet 92, the upper plate-shaped yoke 193 and the lower plate-shaped yoke 194 face are identical to one another.

Additionally, as shown in a magnified view in Fig. 10 (b), the upper plate-shaped yoke 193 and the lower plate-shaped yoke 194 are formed with elongated protrusions 201, 202 at upper and lower sides, thereby narrowing the gap at the location of the elongated protrusions 201, 202 between the upper plate-shaped permanent magnet 91 or the lower plate-shaped permanent magnet 92 by the size equal to the thickness of the elongated protrusions 201, 202.

Since the upper plate-shaped permanent magnet 91 and the lower plate-shaped permanent magnet 92 are placed at different sides of the flat coil 60 in this balance, the straight distance between the upper plate-shaped permanent magnet 91 and the lower plate-shaped permanent magnet 92 is longer as compared to the construction of Fig. 4 in which they are placed at the same side, thereby decreasing magnetic flux that directly flows in and out between the permanent magnets. As a result, increased is the effective magnet flux that acts on the upper parallel winding portion 61 and the lower parallel winding portion 62 of the flat coil 60.

Magnetic flux that flows in from the opposing permanent magnet also increases because the distance between the upper plate-shaped permanent magnet 91 and the lower plate-shaped permanent magnet 92 is shorter at the upper and lower locations of the upper plate-shaped yoke 193 and the lower plate-shaped yoke 194 where the elongated protrusions 201, 202 are formed. As a result, distribution of magnetic flux density becomes uniform over a wider range between the upper plate-shaped permanent magnet 91 and the upper plate-shaped yoke 193 as well as between the lower plate-shaped permanent magnet 92 and the lower plate-shaped yoke 194.

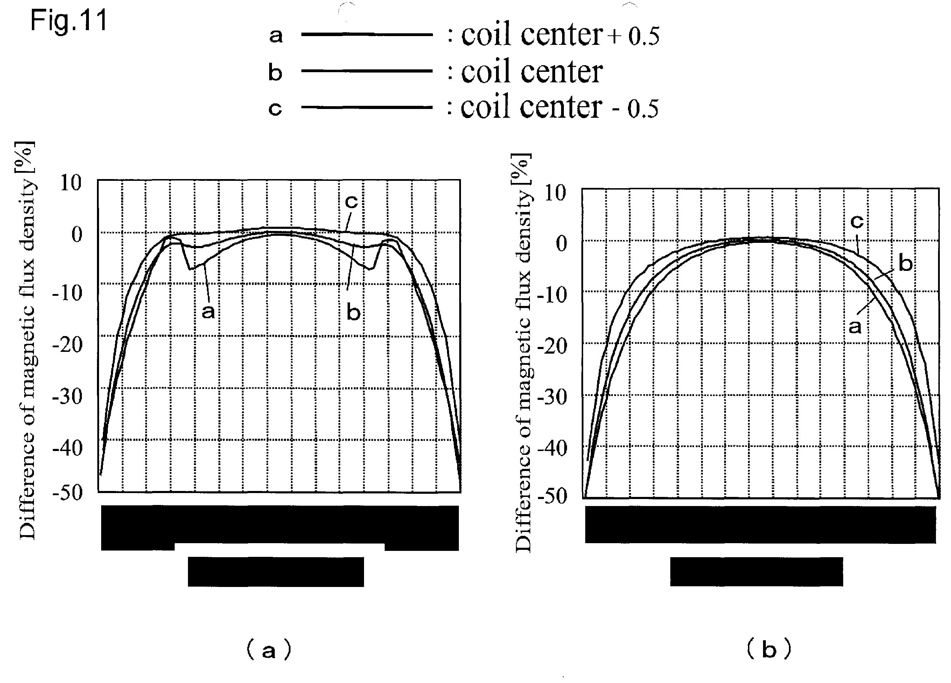

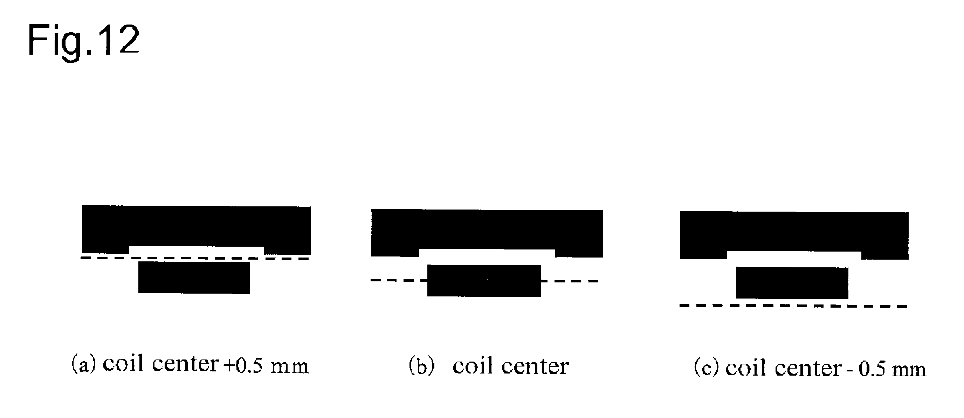

Fig. 11 (a) shows analytical results of the distribution of magnetic flux density when the plate-shaped yoke having elongated protrusions is opposed to the plate-shaped permanent magnet. As shown in Fig. 12, the magnetic flux density is analyzed at a dotted line position (a) that is closer to the plate-shaped yoke by 0.5 mm from the coil center, a dotted line position (b) that is equal to the coil center and a dotted line position (c) that is closer to the permanent magnet by 0.5 mm from the coil center. In Fig. 11 (a), the maximum value of the magnetic flux at the position (c) is set as a reference value and the magnetic flux density at each location in the length direction of the plate-shaped yoke (left to right direction on the sheet of paper) is shown as the difference in percentage. As a reference purpose, Fig. 11 (b) shows distributions of magnetic flux in case of the plate-shaped yoke having no elongated protrusions.

As apparent from comparison of Fig. 11 (a) and Fig. 11 (b), areas having more uniform distribution of magnetic flux density can be expanded by providing the elongated protrusions at the upper and lower sides of the plate-shaped yoke.

Accordingly, even if the flat coil 60 may be shifted in the y-direction as indicated in Fig. 10 (a), the upper parallel winding portion 61 and the lower parallel winding portion 62 change their positions within substantially uniform distribution area of magnetic flux density, thereby preventing the relationship between the current supplied to the flat coil 60 and the developing electromagnetic force from changing.

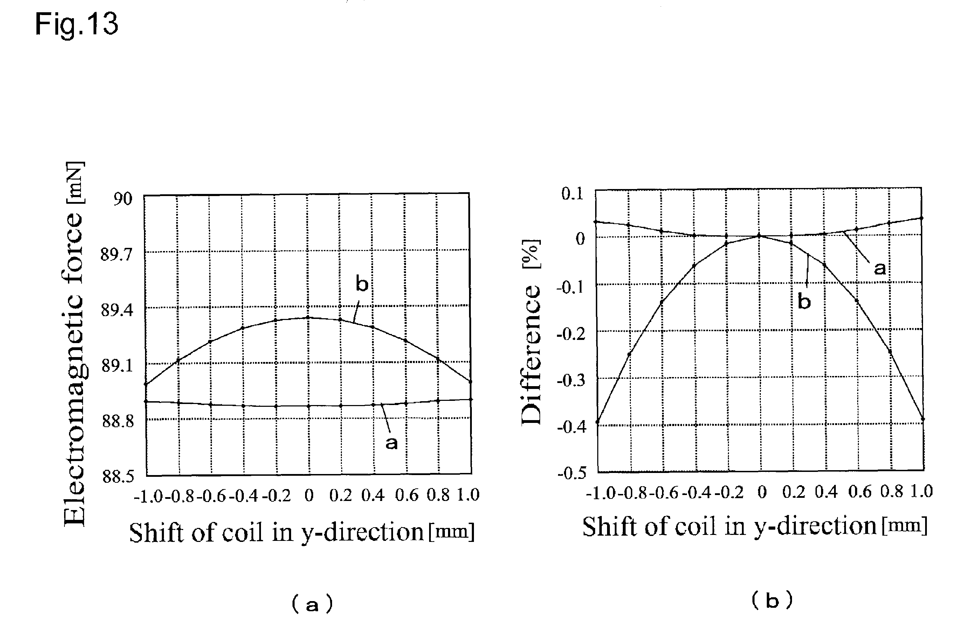

Fig. 13 (a) shows graphs how the electromagnetic force varies when the flat coil 60 moves in the y-direction as indicated in Fig. 10 (a). In Fig. 13 (a), a curve a shows the characteristic of the electromagnetic force balance provided with the magnetic circuit as shown in Fig. 10 (a) and a curve b is for a reference example and shows a characteristic of the balance provided with the magnetic circuit as shown in Fig. 4 (i.e., the magnetic circuit comprising the permanent magnets opposing to the upper winding portion and the lower winding portion of the flat coil placed at the same side of the flat coil and the plate-shaped yokes placed at the opposite side of the flat coil in pairs with the permanent magnets but having no elongated protrusions). Also shown in Fig. 13 (b) are graphs of the electromagnetic forces in difference in percentage from a reference value at different locations in the y-direction of the flat coil 60, wherein the electromagnetic force at 0 position in the y-direction of the flat coil 60 is the reference value.

As apparent from Fig. 13 (a) and (b), in the electromagnetic force balance provided with the magnetic circuit as shown in Fig. 10, the electromagnetic force to be developed remains substantially unchanged even if the flat coil 60 may move in the Y-direction.

In the electromagnetic force balance, since the upper plate-shaped permanent magnet 91 is fixedly mounted on the first lateral side yoke 73 and the lower plate-shaped permanent magnet 92 is fixedly mounted on the second lateral side yoke 74, the upper parallel winding portion 61 tends to approach the upper plate-shaped permanent magnet 91 and the lower parallel winding portion 62 tends to move away from the lower plate-shaped permanent magnet 92 when the flat coil 60 shifts in the x-direction as indicated in Fig. 10 (a).

Wherein, the magnetic field at the location between the plate-shaped permanent magnet and the plate-shaped yoke becomes stronger as it approaches closer to the plate-shaped permanent magnet. This is because the areas of the plate-shaped permanent magnet and the plate-shaped yoke are finite, there is certain magnet flux flowing from the plate-shaped permanent magnet to somewhere other than the plate-shaped yoke and the magnetic flux density becomes higher at a location closer to the plate-shaped permanent magnet.

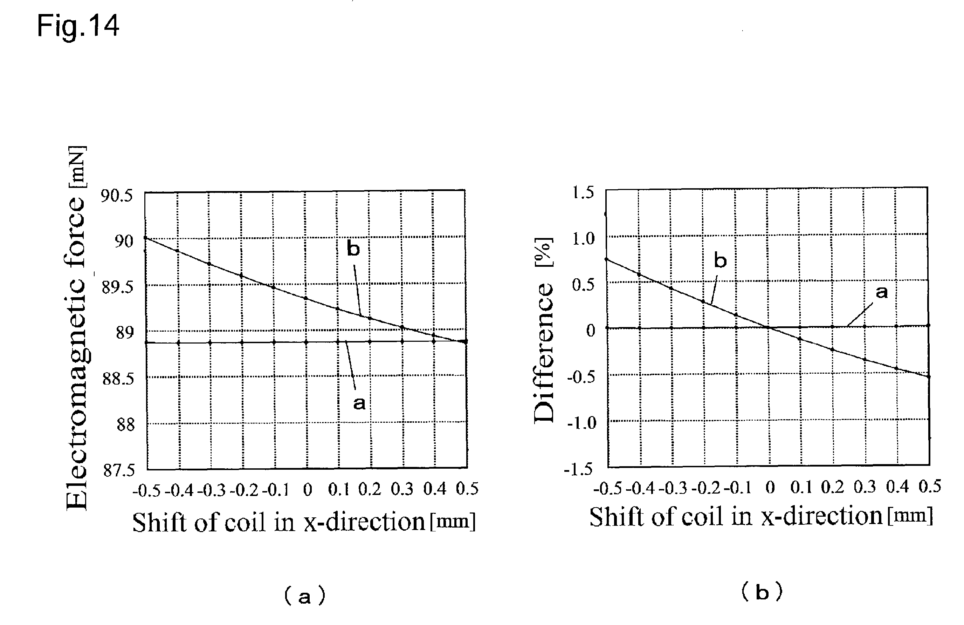

Graphs as shown in Fig. 14 (a) show how the electromagnetic force varies when the flat coil 60 moves in the x-direction as indicated in Fig. 10 (a). In Fig. 14 (a), a curve a represents the characteristic of the electromagnetic force balance provided with the magnetic circuit as shown in Fig. 10 (a), while a curve b is for a reference example and represents the characteristic of the case as shown in Fig. 4 wherein the plate-shaped permanent magnets are fixedly mounted on the same side. On the other hand, graphs in Fig. 14 (b) show the electromagnetic force at various locations in percentage difference from a reference value when the flat coil 60 moves in the x-direction, wherein the reference value is the electromagnetic force when the flat coil 60 is at the 0 position in the x-direction.

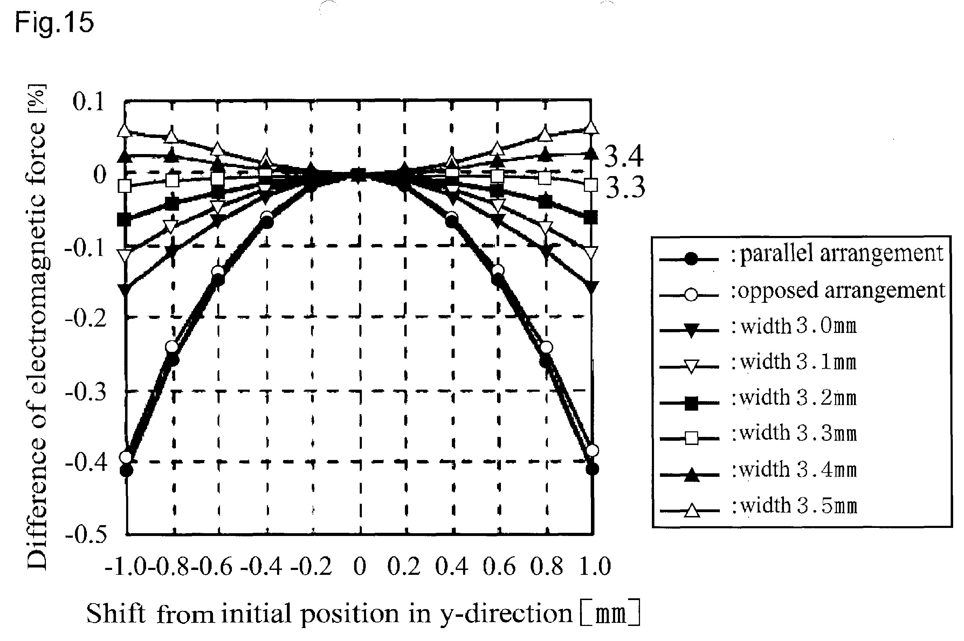

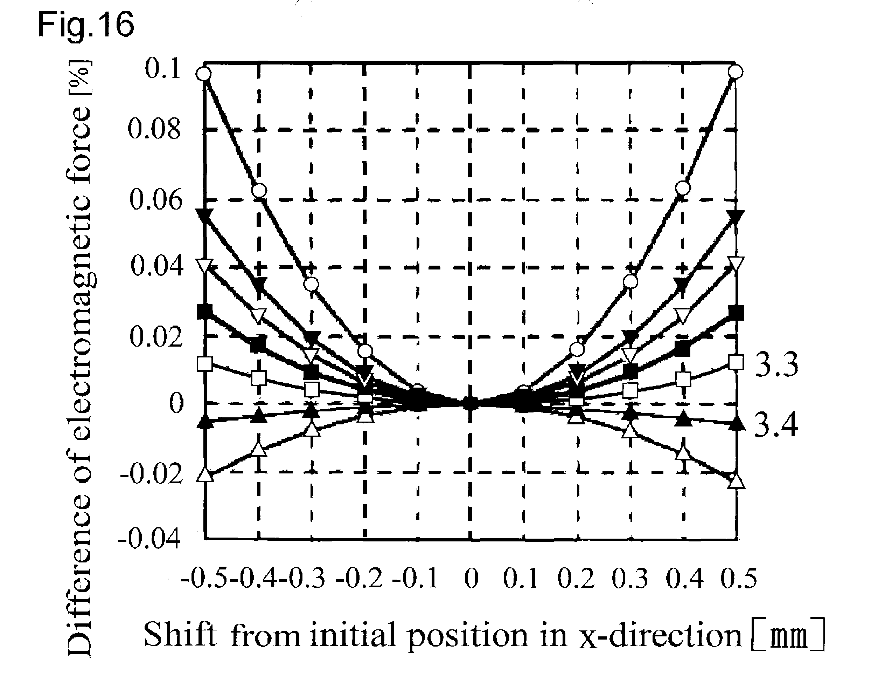

As apparent from Fig. 15 and Fig. 16, in the electromagnetic force balance provided with the magnetic circuit as shown in Fig. 10 (a), the electromagnetic force to be developed remains substantially unchanged even if the flat coil 60 may move in the x-direction.

Fig. 15 and Fig. 16 also show how characteristics change depending on different widths of the elongated protrusions 201, 202 that are formed with the upper plate-shaped yoke 193 and the lower plate-shaped yoke 194.

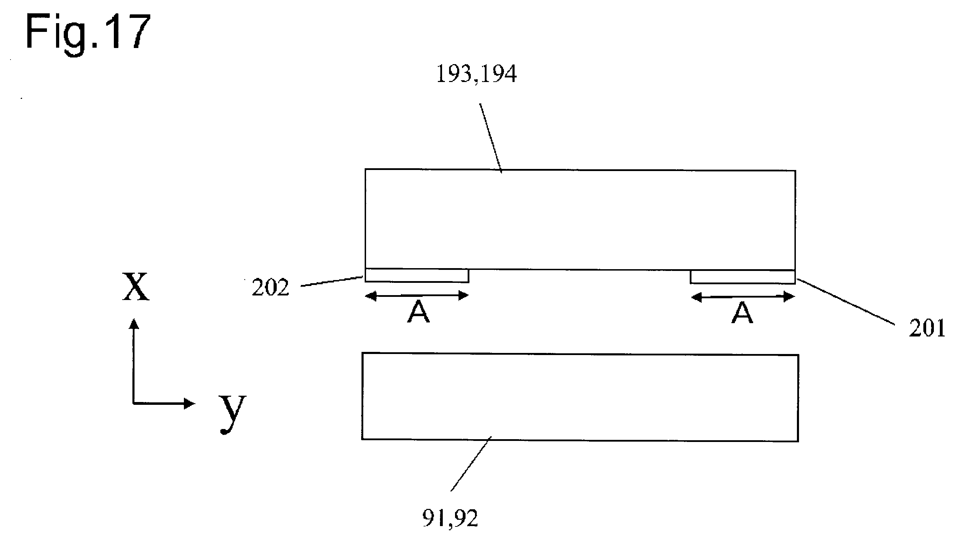

Wherein, the entire lengths of the plate-shaped yokes 193, 194 are kept constant as shown in Fig. 17 and change in characteristic is analyzed by varying the width A of the elongated protrusions 201, 202.

Fig. 15 shows test results how the electromagnetic force changes depending on different locations of the flat coil 60 in the y-direction by changing the width A from 3.0 mm to 3.5 mm in 0.1 mm step.

Fig. 16 shows how the electromagnetic force changes when the flat coil 60 moves in the x-direction under the same conditions.

It is understood from Fig. 15 that the developing electromagnetic force remains unchanged regardless of the movement of the flat coil 60 in the y-direction if the width A of the elongated protrusions is set within the range from 3.3 mm to 3.4 mm.

It is also understood from Fig. 16 that the developing electromagnetic force remains unchanged regardless of the movement of the flat coil 60 in the x-direction if the width A of the elongated protrusions is set within the range from 3.3 mm to 3.4 mm.

Accordingly, in the electromagnetic force balance provided with the magnetic circuit as shown in Fig. 10 (a), change of the developing electromagnetic force due to the movement of the flat coil 60 can be made to substantially 0 by properly choosing the width of the elongated protrusions 201, 202 that are formed with the upper plate-shaped yoke 193 and the lower plate-shaped yoke 194.

It is to be noted that the construction as disclosed hereinabove is simply an examples of the present invention and thus the present invention should not be restricted only thereto.

### Industrial Applicability:

Since the electromagnetic force balance according to the present invention can be assembled into a narrow space, it finds wide applications such as manufacturing plants having production lines, logistic facilities having transportation lines, research facilities, medical care facilities, etc.

### Description of reference Numerals:

- 10: lever
- 11: load receiving portion
- 12: coil
- 13: magnetic circuit
- 14: photo sensor
- 15: position detection portion
- 16: PID controller
- 17: A/D converter
- 18: CPU
- 19: interface
- 20: cover
- 21: base
- 22: rear cover
- 30: load receiving portion
- 50: base plate
- 51: load receiving portion
- 52: movable portion
- 53: Roberval mechanism
- 54: coupling portion
- 55: lever portion
- 56: fulcrum
- 57: fixed portion
- 58: force point
- 60: flat coil
- 61: upper parallel winding portion
- 62: lower parallel winding portion
- 70: magnetic circuit
- 71: through-hole
- 72: through-hole
- 73: first lateral side yoke
- 74: second lateral side yoke
- 75: front side yoke
- 76: rear side yoke
- 77: upper side yoke
- 78: lower side yoke
- 80: slit
- 81: photo interrupter
- 91: upper plate-shaped permanent magnet
- 92: lower plate-shaped permanent magnet
- 93: upper plate-shaped yoke
- 94: lower plate-shaped yoke
- 95: plate-shaped permanent magnet
- 96: plate-shaped permanent magnet
- 97: electromagnetic steel plate
- 100: assembling type balance
- 120: carry-in conveyor
- 121: carry-out conveyor
- 130: object to be weighed
- 193: upper plate-shaped yoke
- 194: lower plate-shaped yoke
- 201: elongated protrusion
- 202: elongated protrusion
- 551: flat coil support portion

## Claims

1. An electromagnetic force balance comprising a lever portion extending forwardly and backwardly from a fulcrum, a coil to be mounted at a backward side from the fulcrum of the lever portion, and a magnetic circuit for developing magnetic field to act on the coil, wherein a force to act on a force point of the lever portion at a forward side of the fulcrum is compensated by supplying a current to the coil, **characterized in that**:
the coil is a flat coil comprising upper and lower winding portions that are parallel with the extending direction of the lever portion and extending along a vertical plane parallel with the extending direction of the lever portion; and
the magnetic circuit comprises one or a plurality of plate-shaped permanent magnets facing the upper or lower winding portion of the flat coil and magnetized in the direction perpendicular to the vertical plane, and a yoke member for guiding magnetic line of force of the permanent magnet so as to develop magnetic flux in the direction perpendicular to the vertical plane.

2. An electromagnetic force balance of claim 1, wherein the magnetic circuit comprises a pair of permanent magnets facing the upper and lower winding portions at one side of the flat coil and the directions of magnetization of the pair of permanent magnets are opposite to each other.

3. An electromagnetic force balance of claim 2, wherein the magnetic circuit further comprises a pair of plate-shaped yoke members at the other side of the flat coil in opposed relationship to the pair of permanent magnets.

4. An electromagnetic force balance of claim 3, wherein the plate-shaped yoke member has the same area as the permanent magnet that faces therewith by way of the flat coil.

5. An electromagnetic force balance of claim 1, wherein the magnetic circuit comprises an upper permanent magnet facing the upper winding portion at one side of the flat coil, a lower permanent magnet facing the lower winding part at the other side of the flat coil, an upper yoke member facing the upper permanent magnet by way of the upper winding portion, and a lower yoke member facing the lower permanent magnet by way of the lower winding portion, wherein;
the direction of magnetization of the upper permanent magnet is opposite to the direction of magnetization of the lower permanent magnet, and
elongated protrusions are formed at upper and lower sides of the upper yoke member for shortening the distance between the upper permanent magnet and also elongated protrusions are formed at upper and lower sides of the lower yoke member for shortening the distance between the lower permanent magnet.

6. An electromagnetic force balance of either one of claims 1-5, further comprising an electromagnetic steel plate for covering the outside of the magnetic circuit.

7. An electromagnetic force balance of either one of claims 1-6, wherein it is used by assembling in a production line.
